# EUROPEAN PATENT APPLICATION

(11) **EP 0 779 307 A1**
(43) Date of publication of application: **18.06.1997**
(21) Application number: 96921095.4
(22) Date of filing: 26.06.1996
(51) Int. Cl.: C08F 255/02, C08F 263/04, C08L 67/00, C08L 51/06, C08K 3/00, C08K 5/00

(54) **GRAFT ETHYLENE-VINYL ACETATE COPOLYMER AND RESIN COMPOSITION CONTAINING THE SAME**

(30) Priority: 30.06.1995 JP 188181/95
(71) Applicant: KANEGAFUCHI KAGAKU KOGYO KABUSHIKI KAISHA, Kita-ku Osaka-shi Osaka-fu 530 (JP)
(72) Inventor: TAMAI, Kazuhiko, Tarumi-ku Kobe-shi Hyogo 655 (JP); GOTO, Masaoki, Tarumi-ku Kobe-shi Hyogo 655 (JP); KURIMOTO, Kenji, Tarumi-ku Kobe-shi Hyogo 655 (JP)
(74) Representative: VOSSIUS & PARTNER
(86) International application number: JP9601771
(87) International publication number: WO9702302

(57) **Abstract**

A graft-modified polyolefin resin is provided, which is obtained by an impregnation polymerizaton method which comprises preparing an aqueous suspension containing (a) 100 parts (by weight) of an ethylene-vinyl acetate copolymer, (b) 0.1 to 50 parts of compounds having a glycidyl group, (c) 1 to 500 parts by weight of a vinyl monomer, and (d) 0.001 to 10 parts by weight of a radical initiator to 100 parts by weight in total of (b) and (c), impregnating (a) with (b) and (c), and polymerizing (b) and (c) onto (a). The graft-modified ethylene-vinyl acetate copolymer and resin compositions containig the same are excellent in thermal decomposition resistance, adhesion characteristics and compatibility with polyesters and polyamides, and have well-balanced properties of mechanical properties such as impact strength, rigidity and strength, heat resistance and moldability.

## Description

### TECHNICAL FIELD

The present invention relates to graft-modified ethylene-vinyl acetate copolymers and resin compositions containing the same, more particularly to graft-modified ethylene-vinyl acetate copolymers useful as adhesives, modifiers of various resins and compatibility-improvers in the case of polymer blends, and resin compositions containing the same which are not only excellent in mechanical properties such as impact strength, rigidity and strength, but are well balanced in physical properties such as heat resistance and moldability.

### BACKGROUND ART

Ethylene-vinyl acetate copolymers are widely used as a hot-melt adhesive exhibiting an excellent adhesion performance to a variety of adherends, by blending with an adhesion-imparting resin and wax, since those are excellent in weather resistance, ozone resistance and impact strength-imparting property, and possess a high polarity resulting from a vinyl acetate component contained therein as compared with olefin elastomers such as ethylene-propylene copolymers and ethylene-propylene-diene copolymers. However, the ethylene-vinyl acetate copolymers have a drawback of causing decomposition to generate acids when used at high temperatures and, in consequence, innate performances thereof are not only deteriorated, but metallic parts of an equipment used such as a melting tank and a melt-blending machine are rusted and a foul odor is emitted. Hence, an improvement in decomposition resistance at high temperatures of said resins are desired.

Moreover, the ethylene-vinyl acetate copolymers have been tried to be blended with general purpose polymers such as polyethylenes, polypropylenes and polyvinyl chlorides, taking advantage of excellent weather resistance and impact resistance-imparting property inherent therein, and improving effects by blending are obtained. In contrast, to engineering plastics such as polyamides and polyesters, the ethylene-vinyl acetate copolymers do not show sufficient compatibility and thus the desired improving effects by blending are not obtained sufficiently. On the contrary, mechanical properties of the blend and surface appearance of molded articles of the blend are deteriorated and thermal decomposition is caused upon blending because of insufficient resistance to thermal decomposition as mentioned above, and therefore, blending with other polymers is limited.

Polyester resins typically represented by polyethylene therephthalates and polybutylene terephthalates are widely used as various parts in the field of automobile, electric and ectronic appliance, precision machinery and the like because of superior physical and chemical properties thereof such as mechanical, insulating and molding properties. Most of such parts are molded by injection molding.

As the polyester resins are recently used in high-leveled or specific fields, it is expected, in addition to conventional injection molded products, to provide blow molded parts as larger hollow articles at a low cost.

It is substantially impossible, however, to produce blow molded polyester articles in a desired shape because of serious drawdown during blow molding due to lower melt tension and melt viscosity thereof.

Although the polyester resins have superior physical and chemical properties as stated above, toughness thereof such as impact resistance in particular is insufficient and is desirably improved to widen various use of the resin.

In order to improve such melt characteristics of the polyester resins, it has been proposed to employ a resin having high degree of polymerization or a branched resin, or to add various fillers thereto, but none of these proposals are small in improving effects and insufficient to solve the problems.

It has been also proposed to blend an epoxy compound or a copolymer of ethylene and α, β-unsuturated glycidyl ester with the polyester resin so as to increase melt tension and improve drawdown thereof, but effects are still not enough and homogeneously molded articles are difficult to be provided because of instable moldability.

Japanese Laid-Open Patent Publication No. 5-112701 discloses a method of blending to a polyester resin a copolymer of styrene, α, β-unsaturated acid esters and other vinyl monomers and Japanese Laid-Open Patent Publication No. 5-301273 discloses a method of employing a mixture of the specific class of polyester resins and bleinding thereto a copolymer of styrene,α, β-unsaturated acid esters and other vinyl monomers. According to these methods, it is possible to enhance melt viscosity of the polyester resin compositions and improve melt tension of parison and drawdown, but impact resistance is low and when molded articles are reused, melt tension and melt viscosity are decreased, thereby blow molding properties being also decreased.

An object of the present invention is to provide a graft-moldified ethylene-vinyl acetate copolymer improved in resistance to thermal decomporition and excellent in adhesion to organic/inorganic polar materials.

Another object of the present invention is to provide a resin composition comprising a graft-modified ethylene-vinyl acetate copolymer and a polyamide resin and/or a polyester resin, which is excellent in impact resistance, rigidity, heat resistance and surface appearance of molded articles.

A still another object of the present invention is to provide a resin composition comprising a polyester, a graft-modified ethylene-vinyl acetate copolymer and a glycidyl group-containing vinyl copolymer, which is excellent in physical properties such as impact strength and tensile elongation and which is suitably used as a blow molding material and the like because of a decrease in melt tension and melt viscosity being small during melt retention.

### DISCLOSURE OF THE INVENTION

The present invention is, in a first aspect, to provide a graft-modified ethylene-vinyl acetate copolymer obtained by an impregnation polymerization method comprising the steps of:
preparing an aqueous suspension containing
   (a) 100 parts by weight of an ethylene-vinyl acetate copolymer,
   (b) 0.1 to 50 parts by weight of a compound (b1) having a glycidyl group as represented by a general formula (I): 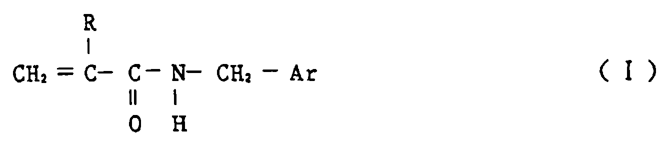 wherein Ar is an aromatic hydrocarbon group of C₆-C₂₃ having at least one glycidyloxy group, and R is a hydrogen atom or a methyl group,
or said compound (b1) and a compound (b2) having a glycidyl group comprising an unsaturated glycidyl ester,
   (c) 1 to 500 parts by weight of a vinyl monomer, and
   (d) 0.001 to 100 parts by weight of a radical initiator to 100 parts by weight in total of said components (b) and (c),
impregnating the component (a) with the components (b) and (c) in the aqueous suspension, and
polymerizing the components (b) and (c) onto the component (a).

The present invention is, in a second aspect, to provide a resin composition comprising a component (A) and a component (B):
(A) 100 parts by weight of a polyamide resin and/or a polyester resin,
(B) 1 - 100 parts by weight of a graft-modified ethylene-vinyl acetate copolymer obtained by an impregnation polymerization method comprising the steps of:

preparing an aqueous suspension containing
   (a) 100 parts by weight of an ethylene-vinyl acetate copolymer,
   (b) 0.1 to 50 parts by weight of a compound (b1) having a glycidyl group as represented by a general formula (I): 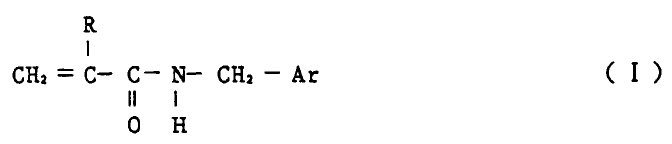 wherein Ar is an aromatic hydrocarbon group of C₆-C₂₃ having at least one glycidyloxy group, and R is a hydrogen atom or a methyl group,
or said compound (b1) and a compound (b2) having a glycidyl group comprising an unsaturated glycidyl ester,
   (c) 1 to 500 parts by weight of a vinyl monomer, and
   (d) 0.001 to 100 parts by weight of a radical initiator to 100 parts by weight in total of said components (b) and (c),
impregnating the component (a) with the components (b) and (c) in the aqueous suspension, and
polymerizing the components (b) and (c) onto the component (a).

The present invention is, in a third aspect, to provide a resin composition comprising a component (A), a component (B) and a component (C):
(A) 100 parts by weight of a polyester resin,
(B) 1 - 100 parts by weight of a graft-modified ethylene-vinyl acetate copolymer obtained by an impregnation polymerization method comprising the steps of:
   preparing an aqueous suspension containing
      (a) 100 parts by weight of an ethylene-vinyl acetate copolymer,
      (b) 0.1 to 50 parts by weight of a compound (b1) having a glycidyl group as represented by a general formula (I): 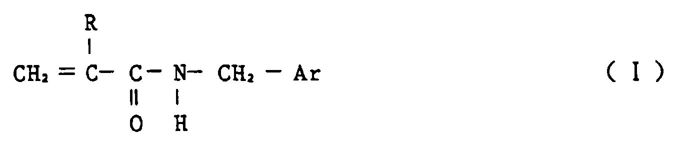 wherein Ar is an aromatic hydrocarbon group of C₆-C₂₃ having at least one glycidyloxy group, and R is a hydrogen atom or a methyl group,
   or said compound (b1) and a compound (b2) having a glycidyl group comprising an unsaturated glycidyl ester,
      (c) 1 to 500 parts by weight of a vinyl monomer, and
      (d) 0.001 to 100 parts by weight of a radical initiator to 100 parts by weight in total of said components (b) and (c),
   impregnating the component (a) with the components (b) and (c) in the aqueous suspension, and
   polymerizing the components (b) and (c) onto the component (a),
(C) 0.1 - 20 parts by weight of a glycidyl group-containing vinyl copolymer comprising 99 - 50 % by weight of at least one vinyl monomer selected from the group consisting of styrene,α-methylstyrene, acrylonitrile, methyl methacrylate, butyl methacrylate, brominated styrenes and phenyl maleimides and 1 - 50 % by weight of glycidyl methacrylate.

### BEST MODES FOR CARRYING OUT THE INVENTION

The graft-modified ethylene-vinyl acetate copolymer as a first aspect of the present invention is obtained by an impregnation polymerization method comprising the steps of:
preparing an aqueous suspension containing
   (a) an ethylene-vinyl acetate copolymer,
   (b) a compound (b1) having a glycidyl group as represented by a general formula (I): 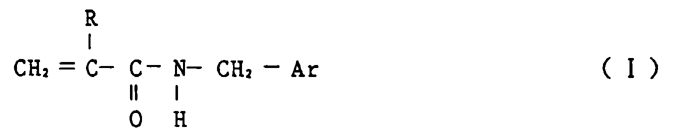 wherein Ar is an aromatic hydrocarbon group of C₆-C₂₃ having at least one glycidyloxy group, and R is a hydrogen atom or a methyl group,
or said compound (b1) and a compound (b2) having a glycidyl group comprising an unsaturated glycidyl ester,
   (c) a vinyl monomer, and
   (d) a radical initiator,
impregnating the component (a) with the components (b) and (c) in the aqueous suspension, and
polymerizing the components (b) and (c) onto the component (a).

As the ethylene-vinyl acetate copolymer of the component (a), it is preferred to use an ethylene-vinyl acetate copolymer comprising 50 - 99 % by weight of ethylene and 50 - 1 % by weight of vinyl acetate, having a melt flow rate of 0.1 - 500 g/10 min., measured according to JIS K 6730. If the proportion is outside the above range, a balance of thermal decomposition resistance, fluidity and mechanical properties is deteriorated.

As the compound (b1) having a glycidyl group as one of the components (b) for modifying the ocmpoment (a), a compound as represented by the general formula (I) is preferably used: 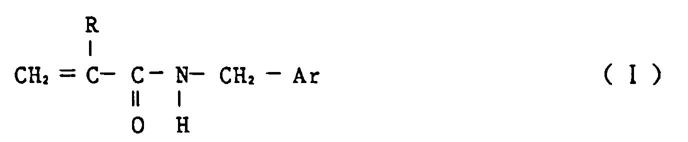 wherein Ar is an aromatic hydrocarbon group of C₆-C₂₃ having at least one glycidyloxy group, and R is a hydrogen atom or a methyl group.

The compound is derived from a compound having in the molecule at least one acrylamide group and one glycidyl group, and said acrylamide group includes methacrylamide.

Such a compound can be produced by a process, for example, as disclosed in Japanese Laid-Open Patent publication No.60-130580. That is, the intended compound may be obtained by steps of condensing an aromatic hydrocarbon having at least one phenolic hydroxyl group and N-methylol acrylamide or N-methylol methacrylamide in the presence of an acidic catalyst, and then subjecting to glycidylization of the hydroxyl group by the use of epihalohydrin.

As the aromatic hydrocarbon having at least one phenolic hydroxyl group, a phenolic compound having 6 to 23 carbon atoms may be used.

Specific examples of said phenolic compounds are phenol, cresol, xylenol, carvacrol, thymol, naphthol, resorcin, hydroquinone, pyrogallol and phenathollol. Among those, the univalent phenols having alkyl substituent groups are preferable.

For example, if 2, 6-xylenol and N-methylol acrylamide are used as starting materials, a compound as represented by a structural formula (II) is obtainable.

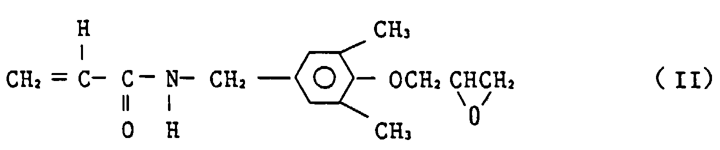

The compound (b2) having a glycidyl group as another of the components (b) used in the present invention, namely, the unsaturated glycidyl ester includes, for example, glycidyl acrylate, glycidyl methacrylate, mono- and di-glycidyl esters of itaconic acid, mono-, di- and tri-glycidyl esters of butene tricarboxylic acid, mono- and di-glycidyl esters of citraconic acid, mono- and di-glycidyl esters of endo-cis-bicyclo (2,2,1) hepto-5-en-2,3-dicarboxylic acid, mono- and di-glycidyl esters of allyl succinic acid, and glycidyl ester of p-stylene carboxylic acid. These are used singly or in combination of two or more. Of the above-mentioned compounds, the glycidyl methacrylate is desirable in terms of cost and its degree of impregnation to an eibylene-vinyl acetate copolymer.

As the vinyl monomer of the component (c), the following compounds are included. For example, aromatic vinyl compounds such as stylene, o-methylstylene, p-methylstylene, m-methylstylene,α-methylstylene and divinylbenzene, methacrylic acid alkyl esters having 1 to 22 carbon atoms such as methyl methacrylate, ethyl methacrylate, i-propyl methacrylate, n-butyl methacrylate, t-butyl methacrylate, 2-ethylhexyl methacrylate and stearyl methacrylate, acrylic acid alkyl esters having 1 to 22 carbon atoms such as methyl acrylate, ethyl acrylate, i-propyl acrylate, n-butyl acrylate, t-butyl acrylate, 2-ethylhexyl acrylate and stearyl acrylate, vinyl alkyl ethers having 1 to 22 carbon atoms such as vinyl methyl ether, vinyl ethyl ether, vinyl n-propyl ether, vinyl i-propyl ether, vinyl i-butyl ether, vinyl n-amyl ether, vinyl i-amyl ether, vinyl 2-ethylhexyl ether and vinyl octadecyl ether, unsturated nitorile compounds such as acrylonitrile and methacrylonitrile, unsaturated amino compounds such as acrylamide and methacryl amide, maleic acid dialkyl esters such as maleic acid di-n-amyl ester, maleic acid di-n-butyl ester, maleic acid di-i-amyl ester, maleic acid di-i-butyl ester, maleic acid dimethyl ester, maleic acid di-n-propyl ester, maleic acid di-octyl ester and maleic acid dinonyl ester, allyl alkyl ethers having 1 to 8 carbon atoms such as allyl ethyl ether and allyl n-octyl ether, diene compounds such as dicyclopentediene, butadiene, isoprene, chloroprene, phenyl propadiene, cyclopentadiene, 1,5-norbornadiene, 1,3-cyclohexadiene, 1,4-cyclohexadiene, 1,5-cyclohexadiene and 1,3-cyclooctadiene, and other vinyl monomers such as allyl methacrylate, acrylic acid, methacrylic acid, maleic acid, maleic acid anhydride and vinyl acetate. These may be used singly or in combination of two or more.

As the radical initiator of the component (d), there are included, for example, organic peroxides such as methyl ethyl ketone peroxide, di-t-butyl peroxide, 1,1-bis (t-butylperoxy)-3,3,5-trimethyl cyclohexane, n-butyl-4,4-bis (t-butylperoxy) valerate, 2,5-dimethylhexane-2,5-dihydroperoxide, α, α'-bis (t-butylperoxy-m-isopropyl) benzene, 2,5-dimethyl-2,5-di (t-butylperoxy) hexane, 2,5-dimethyl-2,5-di (t-butylperoxy) hexine-3 and benzoyl peroxide, and azo compounds such as 1,1'-azobis (cyclohexane-1-carbonitrile), 1-[(1-cyano-1-methylethyl) azo] formamide, 2-phenylazo-4-methoxy-2,4-dimethyl-valeronitrile, 2,2'-azobis (2-methyl butyronitrile), 2,2'-azobisisobutyronitrile, 2,2'-azobis (2,4,4-trimetylpentane), 2,2'-azobis (2-acetoxypropane) and 2,2'-azobis (2-acetoxybutane). These amy be used singly or in combination of two or more. Moreover, these are optinally selected according to the conditions such as the polymerization method, polymerization temperature and time or the molecular weight and viscosity of the polymer obtained.

The graft-modified ethylene-vinyl acetate copolymer of the present invention is produced, for example, by process steps of preparing an aqueous suspension containing the components (a), (b), (c) and (d), impregnating the component (a) with the components (b) and (c), and graft-polymerizing the components (b) and (c) onto the component (a).

The proportions of the components (a), (b) and (c) are, to 100 parts by weight of the component (a), 0.1 - 50 parts by weight, preferably 0.1 - 30 parts by weight of the component (b), and 1 - 500 parts by weight, preferably 1 - 200 parts by weight, more preferably 1 - 100 parts by weight of the component (c). The proportion of the component (d) is 0.001 - 10 parts by weight, preferably 0.05 - 5 parts by weight to 100 parts by weight of the total amount of the components (b) and (c). If the proportion of the component (b) is more than the above range, fluidity lowers and gellation is caused in some cases, and if it is less than the above range, thermal decomposition resistanace and adhesion lower. And if the proportion of the component (c) is more than the above range, the polymerization porceeds principally between the excessive vinyl monomers and thus there arise excessive agglomeration, fusing and mass-forming in the aqueous suspension during the polymerization, and if it is less than the above rangem, the impregnation of the component (a) with the component (b) lowers to thus result in a decrease in a graft reaction amount of the component (b) onto the component (a). If the proportion of the component (d) is more than the range, the component (a) causes excessive cross-linking and if it is less than the above range, the polymerization becomes insufficient.

The graft-modified ethylene-vinyl acetate copolymer of the present invention may be in a form of a composition containing an unmodified ethylene-vinyl acetate copolymer. In such a case, an amount of the unmodified ethylene-vinyl acetate copolymer is 0 - 95 % by weight, preferably 0 - 80 % by weight.

The polyamide resin used in a second aspect of the present invention, namely, a resin composition comprising (A) a polyamide resin and/or a polyester resin and (B) a graft-modified ethylen-vinyl acetate copolymer, is not specifically limited if it may be used for molding purpose. Examples are polymers as obtained from condensation reaction of aliphatic amino acids, lactams, diamines and dicarboxylic acids as principal ingredients, or copolymerized polyamides with a small amount of aromatic and other aliphatic ingredients introduced into the aliphatic ingredient.

Examples of the aliphatic amino acid are 6-amino caproic acid, 11-amino undecanoic acid, and 12-amino dodecanoic acid. Examples of the lactam are ε-caprolactam, and ω-laurolactam. Examples of the diamine are tetramethylene diamine, hexamethylene diamine, undecamethylene diamine, and dodecamethylene diamine.

Examples of the dicarboxylic acids are adipic acid, azelaic acid, sebacic acid, dodecanoic diacid, and diglycolic acid.

Examples of the polyamide resin are polycaproamide (nylon 6), polyhexamethylene adipamide (nylon 66), polytetramethylene adipamide (nylon 46), polydodecanamide (nylon 12), and these may be used singly or in combination of two or more.

The polyester resin used in a second aspect of the present invention, namely, a resin composition comprising (A) a polyamide resin and/or a polyester resin and (B) a graft-modified ethylene-vinyl acetate copolymer, includes polymers or copolymers, obtained by condensation reaction of aromatic dicarboxylic acids or ester-formable derivatives thereof and diols or ester-formable derivatives thereof as principal ingredients, or ring opening polymers of lactone.

The aromatic dicarboxylic acid includes, for example, terephthalic acid, iso-phthalic acid, phthalic acid, 2,6-naphthalene dicarboxylic acid, bis (p-carboxyphenyl) methane, anthracene dicarboxylic acid, 4,4'-di-phenyl dicarboxylic acid, 4,4'-diphenylether dicarboxylic acid or ester-formable derivatives thereof or mixtures thereof. The ester-formable derivative of the aromatic dicarboxlyic acid includes ester-formable derivatives of the specific examples. These aromatic dicarboxylic acids or their ester-formable derivatives may be used singly or in combination of two or more.

The diol includes, for example, aliphatic diols having 2 to 10 carbon atoms such as ethylene glycol, 1,3-propane diol, 1,4-butane diol, neopentyl glycol, 1,5-pentane diol, 1,6-hexane diol, 1,8-octane diol, cyclohexane diol, and long chain glycols having a molecular weight of 400 to 6000 such as polyethylene glycol, poly-1,3-propylene glycol, polytetramethylene glycol or mixtures thereof. The ester-formable derivative of diol includes ester-formable derivatives of said specific examples. These diols or their ester-formable derivatives may be used singly or in combination of two or more.

Examples of the polyester resins are polyethylene therephthalate, polypropylene terephthalate, polybutylene terephthalate, polyhexamethylene therephthalate, polyethylene-2,6-naphthalate, and a mixture of polyethylene terephthalate and polybutylene terephthalate.

The proportions of the polyamide resin, the polyester resin and the graft-modified ethylene-vinyl acetate copolymer are 0 - 100 parts by weight of the polyamide resin, 100 - 0 parts by weight of the polyester resin, and to 100 parts by weight of the total amount of the polyamide resin and the polyester resin, 1 - 100 parts by weight, preferably 1 - 50 parts by weight of the graft-modified ethylene-vinyl acetate copolymer. If the proportions are outside the above ranges, a balance of physical properties such as heat resistance, impact strength, rigidity and surface appearance becomes insufficient.

As the glycidyl group-containing vinyl copolymer (C) of a third aspect of the present invention, namely, a resin composition comprising (A) a polyester resin, (B) a graft-modified ethylene-vinyl acetate copolymer and (C) a glycidyl group-containing vinyl copolymer, there are included copolymers comprising 99 - 50 % by weight, preferably 99 - 75 % by weight of at least one vinyl monomer selected from the group consisting of styrene, α-methylstyrene, acrylonitrile, methyl methacrylate, butyl methacrylate, brominated styrene and phenyl maleimide and 1 - 50 % by weight, preferably 1 - 25 % by weight of glycidyl methacrylate. If the glycidyl methacrylate is less than the above range, blow molding property lomers while it is more than the above range, molding fluidity of a resin composition notoriously lowers.

The proportions of (A) the polyester resin, (B) the graft-modified ethylene-vinyl acetate copolymer and (C) the glycidyl group-containing vinyl copolymer are, to 100 parts by weight of (A), 1 - 100 parts by weight, preferably 1 - 50 parts by weight of (B) and 0.1 - 20 parts by weight, preferably 0.2 - 10 parts by weight of (C). If the proportions are outside the above ranges, a balance of physical properties such as melt tension, melt viscosity, molding fluidity, impact strangth, rigidity and surface appearance becomes insufficient.

The resin compositions of a first aspect of the present invention, namely, (A) a polyamide resin and/or a polyester resin and (B) a graft-modified ethylene-vinyl acetate copolymer, and of a second aspect of the present invention, namely, (A) a polyester resin, (B) a graft-modified ethylene-vinyl acetate copolymer and (C) a glycidyl group-containing vinyl copolymer, may be prepared by, for example, mixing those uniformly by the use of a stirrer, then melt-kneading the mixture. The melt-kneading can be made by the use of known blenders such as an extruder, heat roller, Brabender® and Banbury mixer®.

As a filler added in the present invention, there are included, for example, silica, talc, mica, glass fiber, glass beads, hollow glass bead, neutral clays, carbon fiber, aromatic polyamide fiber, aromatic polyester fiber, vinylon fiber, carbonized fiber, silicon carbide fiber, alumina fiber, potassium titanate fiber and metalic fiber. Those fillers may be used singly or in combination of two or more.

The amount of the filler is 1 - 100 parts by weight, preferably 10 - 50 parts by weight, to 100 parts by weight of the resin ingredients of the resin compositions of the present invention. If it is less than the above range, an addition effect is insufficient, while if it is more than the range, molding fluidity lowers.

As a flame retardant used in the present invention, there are included, for example, halogenated flame retardants such as tetrabromobisphenol A, 2,2-bis (4-hydroxy-3,5-dibromophenyl) propane, hexabromobenzene, tris (2,3-dibromopropyl) isocyanurate, 2,2-bis (4-hydroxy ethoxy-3,5-dibromophenyl) propane, decabromodiphenyl oxide, brominated polyphosphate, chlorinated polyphosphate and chlorinated paraffin, phosphorous flame retardants such as ammonium phosphate, tricresyl phosphate, triethyl phosphate, trisshloroethyl phosphate, tris (β-chloroethyl) phosphate, trisdichloropropyl phosphate, cresyl phenyl phoshate, xyleny diphenyl phosphate, acidic phosphoric acid ester and nitrogen-containing phosphorous compound, inorganic flame retardants such as red phosphor, zinc oxide, antimony trioxide, zirconium hydroxide, barium metaborate, aluminum hydroxide and magnesium hydroxide, and high molecular flame retardants such as brominated polystyrenes, brominated poly-α-methylstyrenes, brominated poycarbonates, brominated polyepoxy resins, chlorinated polyethylenes, chlorinated poly-α-methylstyrenes, chlorinated polycarbonates and chlorinated polyepoxy resins. These may be used singly or in combination of two or more. The amount of the flame retardant is 1 - 50 parts by weight, preferably 1 - 30 parts by weight, to 100 weight parts of the resin ingredients of the resin compositions of the present invention. If it is less than the above range, an effect of the flame retardance is not obtained and if it is more than the above range, molding fluidity and mechanical characteristics lower.

The resin compositions of the present invention may, if necessary, further contain a stabilizer and a catalyst to increase reactivity of the graft-modified ethylene-vinyl acetate copolymer.

As an antioxidant available for the stabilizer includes, for example, phenol compounds and thioether compounds such as 2,4-bis (n-octylthio)-6-(4-hydroxy-3,5-di-t-butylanilino)-1,3,5-triazine, pentaerythrityl-tetrakis [3-(3,5 -di-t-butyl-4-hydroxyphenyl) propionate], 2,2-thio-diethylene bis [3-(3,5-di-t-butyl-4-hydroxyphenyl) propionate], octadecil-3-(3,5-di-t-butyl-4-hydroxyphenyl) propionate, 2,2-thiobis (4-methyl-6-t-butylphenol), 1,3,5-trimethyl-2,4,6-tris (3,5-di-t-butyl-4-hydroxybenzyl) benzene, or phosphorous compounds such as tetrakis (2,4-di-t-butylphenyl)-4,4-biphenylenphosphonite and tris (2,4-di-t-butylphenyl) phosphonite.

A light stabilizer includes, for example, hindered amine compounds such as succinic acid dimethyl-1-(2-hydroxyethyl)-4-hydroxy-2,2,6,6-tetramethyl piperidine polycondensed compounds, poly [[6-(1,1,3,3-tetramethylbutyl) imino-1,3,5-triazine-2,4,diyll][ 2,2,6,6-tetramethyl-4-piperidyl) imino] hexamethylene [2,2,6,6-tetramethylpiperidyl) imino]] and 2-(3,5-di-t-butyl-4-hydroxybenzyl) 2-n-butylmaronic acid bis (1,2,2,6,6-pentamethyl-4-piperidyl).

These may be used singly or in combination of two or more. The amount of the stabilizer is 0.01 - 20 parts by weight to 100 weight parts of the resin compositions of the present invention. If it is less than the above range, a sufficient stabilizer addition effect is not obtained, and if it is more than the above range, mechanical characteristics lower.

The catalyst is not specifically limited, usually selected from combinations of one or more of compounds of accelerating the reaction of a carboxyl group, a hydroxyl group and an ester group with a glycidyl group. Examples are amine compounds such as tertiary amines and quaternary amines, phosphorous compounds such as phophonium salts and phosphines, and imidazoles. Of these compounds, the phosphorous compounds are particularly preferable with respect to heat resistance and stability, specifically including phosphonium salts such as tetra-n-butyl phosphonium bromide, tetra-n-butyl phosphonium chloride, tri-n-butyl methyl phosphonium iodide, tri-n-butyl benzyl phosphonium chloride and tri-n-butyl allyl phosphonium bromide, and phosphines such as triphenyl phosphine. The amount of the catalyst is 0.001 - 2 parts by weight, preferably 0.005 - 1 part by weight to 100 parts by weight of the resin compositions of the present invention. If it is less than the above range, the reaction accelearating effect is not obtained, and if it is more than the above range, mechanical characteristics lower.

Further, the present invention may, if necessary, further contain pigments, antistatic agents, nucleating agents, or thermoplastic crystalline resins or noncrystalline resins other than that of the present invention so long as they do not impair characteristics of the resin compositions of the present invention.

The present invention will be described in greater detail by way of examples but the present invention is in no manner limited thereto, numerous modifications being made without departing from the essence of the present invention.

In the following description, the terms "part(s)" and "%" mean "part(s) by weight" and "% by weight" respectively, unless otherwise specified.

### Example 1: Production of graft-modified ethylene-vinyl acetate copolymer (MEV1)

In a pressure-resistant closed reaction vessel, 1400 parts of an ethylene-vinyl acetate copolymer (EVAFLEX 360® produced by Mitsui-Du Pont Chemical Co., Ltd., vinyl acetate content: 25 %, melt flow rate: 2 g/10 min.), 400 parts of styrene, 200 parts of N-[4-(2,3-epoxypropoxy)-3,5-dimethylbenzyl] acrylamide, 6.0 parts of 1,1-bis (t-butylperoxy) 3,3,5-trimethylcyclohexane, 30 parts of calcium tertiary phosphate, and 1.0 part of an emulsifier (LATEMUL PS® produced by Kao Co., Ltd.) were added to 4200 parts of deionized water and an aqueous suspension was obtained with stirring. The aqueous solution was stirred at 100°C for one hour, then further stirred at 110 °C for three hours to complete the polymerization. The particles obtained were rinsed with water to remove the calcium tertiary phosphate and LATEMUL PS before being dried, thereby obtaining the graft-modified ethylene-vinyl acetate copolymer (MEV1).

### Example 2: Production of graft-modified ethylene-vinyl acetate copolymer (MEV2)

In a pressure-resistant closed reaction vessel, 1600 parts of an ethylene-vinyl acetate copolymer (EVAFLEX 260® produced by Mitsui-Du Pont Chemical Co., Ltd., vinyl acetate content: 28 %, melt flow rate: 6 g/10 min.), 200 parts of methyl methacrylate, 150 parts of styrene, 50 parts of N-[4-(2,3-epoxypropoxy)-3,5-dimethylbenzyl] acrylamide, 4.0 parts of 1,1-bis (t-butylperoxy) 3,3,5-trimethylcyclohexane, 30 parts of calcium tertiary phosphate, and 1.0 part of an emulsifier ( LATEMUL PS® produced by Kao Co., Ltd.) were added to 4200 parts of deionized water and an aqueous suspension was obtained with stirring. The aqueous solution was stirred at 100°C for one hour, then further stirred at 110 °C for three hours to complete the polymerization. The particles obtained were rinsed with water to remove the calcium tertiary phosphate and LATEMUL PS before being dried, thereby obtaining the graft-modified ethylene-vinyl acetate copolymer (MEV2).

### Example 3: Production of graft-modified ethylene-vinyl acetate copolymer (MEV3)

In a pressure-resistant closed reaction vessel, 1400 parts of an ethylene-vinyl acetate copolymer (EVAFLEX 260® produced by Mitsui-Du Pont Chemical Co., Ltd., vinyl acetate content: 28 %, melt flow rate: 6 g/10 min.), 300 parts of styrene, 200 parts of N-[4-(2,3-epoxypropoxy)-3,5-dimethylbenzyl] acrylamide, 100 parts of glycidyl methacrylate, 6.0 parts of 1,1-bis (t-butylperoxy) 3,3,5-trimethylcyclohexane, 30 parts of calcium tertiary phosphate, and 1.0 part of an emulsifier (LATEMUL PS® produced by Kao Co., Ltd.) were added to 4200 parts of deionized water and an aqueous suspension was obtained with stirring. The aqueous solution was stirred at 100°C for one hour, then further stirred at 110 °C for three hours to complete the polymerization. The particles obtained were rinsed with water to remove the calcium tertiary phosphate and LATEMUL PS before being dried, thereby obtaining the graft-modified ethylene-vinyl acetate copolymer (MEV3).

### Example 4: Production of graft-modified ethylene-vinyl acetate copolymer (MEV4)

In a pressure-resistant closed reaction vessel, 1800 parts of an ethylene-vinyl acetate copolymer (EVAFLEX 360® produced by Mitsui-Du Pont Chemical Co., Ltd., vinyl acetate content: 25 %, melt flow rate: 2 g/10 min.), 100 parts of styrene, 100 parts of N-[4-(2,3-epoxypropoxy)-3,5-dimethylbenzyl] acrylamide, 6.0 parts of 1,1-bis (t-butylperoxy) 3,3,5-trimethylcyclohexane, 30 parts of calcium tertiary phosphate, and 1.0 part of an emulsifier (LATEMUL PS® produced by Kao Co., Ltd.) were added to 4200 parts of deionized water and an aqueous suspension was obtained with stirring. The aqueous solution was stirred at 100°C for one hour, then further stirred at 110 °C for three hours to complete the polymerization. The particles obtained were rinsed with water to remove the calcium tertiary phosphate and LATEMUL PS before being dried, thereby obtaining the graft-modified ethylene-vinyl acetate copolymer (MEV4).

### Comparative Example 1

The ethylen-vinyl acetate copolymer (EVAFLEX 360® produced by Mitsui-Du Pont Chemical Co., Ltd., Vinyl acetate content: 25 %, melt flow rate: 2 g/10 min.) employed in Examples was used (EV1).

### Comparative Example 2

The ethylen-vinyl acetate copolymer (EVAFLEX 260® produced by Mitsui-Du Pont Chemical Co., Ltd., vinyl acetate content: 28 %, melt flow rate: 6 g/10 min.) employed in Examples was used (EV2).

### Comparative Example 3

A graft-modified ethylene-vinyl acetate copolymer (EV3) was obtained in the same manner as in Example 1, except that N-[4-(2,3-epoxypropoxy)-3,5-dimethylbenzyl] acrylamide was not used.

The graft-modified ethylene-vinyl acetate copolymers (MEV1 ∼ MEV4) produced in Examples 1 - 4 and EV1 - EV3 produced in Comparative Examples 1 - 3 were evaluated according to the methods mentioned below with respect to thermal decomposition resistance and adhesion strength to aluminium. The results are shown in Table 1.

### (1) Thermal decomposition resistance

Each sample was heated in air to 255 °C at a rate of 10 °C/min., then heating was further continued for one hour at 255 °C, and a weight reduction rate was measurded by TGA.

### (2) Adhesion strength

Each sample formed into power was uniformly mounted between two aluminium plates (0.2 mm thick, 25 mm wide, 100 mm long) and pressed under heating to thus prepare a specimen. Using this specimen, T-peeling strength was measured according to JIS K 6854.

**Table 1**

| | Weight reduction rate (wt %) | T-peeling strength (kgf/25 mm) |
|---|---|---|
| Example 1 | 1.3 | 7.9 |
| Example 2 | 1.5 | 8.5 |
| Example 3 | 1.7 | 9.1 |
| Example 4 | 1.0 | 7.1 |
| Comp. Ex. 1 | 4.0 | 0.4 |
| Comp. Ex. 2 | 3.5 | 0.2 |
| Comp. Ex. 3 | 9.2 | 0.6 |

### Examples 5 - 10

As the components of the resin compositions of the present invention, namely, a polyamide resin, a polyester resin and graft-modified ethylene-vinyl acetate copolymers, glass fiber and a reaction catalyst of the graft-modified ethylene-vinyl acetate copolymer, the followings were used in such combinations and proportions as shown in Table 2 to thus produce resin compositions.
Polyamide resin:
   Nylon 66 (UBE 2020 B® produced by Ube Kosan Co., Ltd., abbreviated as Ny 66 in the tabel)
Polyester resin:
   Polybutyrene terephthalate (800 FP produced by Polyplastic Co., Ltd., abbreviated as PBT in the table)
Graft-modified ethylene-vinyl acetate copolymers:
   Graft-modified ethylene-vinyl acetate copolymers (MEV1, MEV2, MEV3, MEV4) produced by Examples 1, 2, 3 and 4
Glass fiber:
   EC03T-187H/P® produced by Nippon Electric-glass Co., Ltd. (abbreviated GF in the table)
Reaction catalyst:
   Tetrabutyl phosphonium bromide (produced by Aldrich Co., Ltd., abbreviated TBTB in the table)

Resin compositions and specimens were prepared in the method as stated below. The components in proportions as shown in Table 2 were dry-blended, then melt-kneaded by the use of a twin-screw extruder at a cylinder temperature of 275 °C for pelletization. The pellets were vacuum-dried to thus obtain resin compositions. The resin compositions were subjected to injection molding at a cylinder temperature of 280 °C and a mold temperature of 80 °C to thus prepare specimens.

Each specimen was evaluated in respect of the characteristics as mentioned below according to the methods as mentioned below:
(1) Impact strength:
   Impact strength with a notch at 23 °C was measured according to ASTM D256.
(2) Bending characteristics:
   Bending strength and bending modulus were measured according to ASTM D790.
(3) Heat distortion temperature:
   Measured according to ASTM D648.
(4) Surface appearance:
   Evaluation was made by three-rank according to the following criteria:
   A: No sink mark, flash line or flow mark was observed on the surface of the molded article.
   B: Sink mark, flash line or flow mark was observed on the surface of the molded article.
   C: Peeling was observed on the surface of the molded article.

### Comparative Examples 4 and 5

Resin compositions and specimens were prepared in the same manner as in Examples and evaluation was made in the same manner as in Examples, except that the graft-modified ethylene-vinyl acetate copolymer was not used. The proportions of the components and the evaluated results are given in Table 2.

### Comparative Examples 6 and 7

Resin compositions and specimens were prepared in the same manner as in Examples except that an ethylene-glycidyl methacrylate copolymer (BONDFAST E® produced by Sumitomo Kagaku Kogyo K.K., abbreviated as BF in the table) or EV3 produced by Comparative Example 3 was used, and evaluation was made in the same manner as in Examples. The proportions of the components and the evaluated results are given in Table 2.

**Table 2**

| | Proportions | | | | | Characteristics of resin compositions (molded articles) | | | |
|---|---|---|---|---|---|---|---|---|---|
| | (A) | | (B) | | | Impact strength kg· cm/cm | Bending modulus kg/cm³ | Heat distortion temperature (low load)°C | Surface appearance |
| | Ny66 | PBT | MEV Lower: kind | GF | TBPB | | | | |
| Example 5 | 100 | 0 | 10 MEV1 | | - | 15.8 | 27900 | 197 | A |
| Example 6 | 70 | 30 | 10 MEV2 | - | - | 15.1 | 27500 | 186 | A |
| Example 7 | 50 | 50 | 30 MEV2 | - | 0.05 | 34.3 | 22000 | 153 | A |
| Example 8 | 30 | 70 | 10 MEV4 | - | 0.07 | 11.8 | 26100 | 177 | A |
| Example 9 | 0 | 100 | 25 MEV3 | - | - | 82.0 | 17800 | 150 | A |
| Example 10 | 0 | 100 | 10 MEV1 | 30 | - | 12.5 | 71000 | 203 | A |
| Comp. Ex. 4 | 70 | 30 | - | - | - | 3.3 | 29700 | 195 | C |
| Comp. Ex. 5 | 50 | 50 | - | - | - | 2.1 | 29100 | 190 | C |
| Comp. Ex. 6 | 50 | 50 | 30 BF | - | 0.05 | Not moldable due to increased viscosity (short shot) | | | |
| Comp. Ex. 7 | 0 | 100 | 10 EV3 | 30 | - | 6.8 | 68200 | 185 | C |

### Examples 11 - 14

As the components of the resin compositions of the present invention, namely, a polyester resin, graft-modified ethylene-vinyl acetate copolymers, a glycidyl group-containing vinyl copolymer, glass fiber and a reaction catalyst of the graft-modified ethylene-vinyl acetate copolymers, the followings were used in such combinations and proportions as shown in Table 3 to thus produce resin compositions.

Polybutyrene terephthalate (JULANEX 2002® produced by Polyplastic Co., Ltd., abbreviated as PBT in the table)
Graft-modified ethylene-vinyl acetate copolymers:
   Graft-modified ethylene-vinyl acetate copolymers (MEV1, MEV3, MEV4) produced by Examples 1, 3 and 4
Glycidyl group-containing vinyl copolymer:
   Styrene-acrylonitrile-glycidyl methacrylate copolymer (BLENMER CP-20SA produced by Nihon Oils and Fats Co., Ltd., abbreviated as CP)
Glass fiber:
   EC03T-187H/P® produced by Nippon Electric-glass Co., Ltd. (abbreviated GF in the table)
Reaction catalyst:
   Tetrabutyl phosphonium bromide ( produced by Aldrich Co., Ltd., abbreviated TBTB in the table)

Resin compositions and specimens were prepared in the method as stated below. The components in proportions as shown in Table 3 were dry-blended, then melt-kneaded by the use of a 45 mm φ twin-screw extruder at a cylinder temperature of 240 °C for pelletization. The pellets were vacuum-dried to thus obtain resin compositions. The resin compositions were subjected to injection molding at a cylinder temperature of 250 °C and a mold temperature of 60 °C to thus prepare specimens.

Each specimen was evaluated in respect of the characteristics as mentioned below according to the methods as mentioned below and evaluated results are given in Table 3.
(1) Melt viscosity:
   Using a capillary rheometer, each resin composition was fed into a cylinder heated to 255 °C and left to retain for 5 min. under heating, thereafter extruded at a shear rate of 1216/sec through a dice having a diameter of 1 mm, at which point melt viscosity was measured.
(2) Retention stablity under heating:
   Melt viscosity was measured in the same manner as in the above (1) except that the retention time was changed from 5 min. to 25 min. and represented by percentage to 100 % of the melt viscosity measured in the above (1).
(3) Melt tension:
   Using a capillary rheometer, each resin composition was fed into a cylinder heated to 255 °C and left to retain for 5 min. under heating, thereafter extruded at a shear rate of 12/sec through a dice having a diameter of 1 mm, and taken at a rate of 1 m/min., at which point a load was measured.
(4) Impact strength:
   Impact strength with a notch at 23 °C was measured according to ASTM D256.
(5) Tensile characteristics:
   Tensile rupture elongation was measured according to ASTM D638.

### Comparative Example 8

A resin composition and specimens were prepared in the same manner as in Examples and evaluation was made in the same manner as in Examples except that the polyester resin used in Example 11 was solely used. The evaluated results are given in Table 3.

### Comparative Example 9

A resin composition and specimens were prepared in the same manner as in Example 11 except that the graft-modified ethylene-vinyl acetate copolymer was not used, and evaluation was made in the same manner as in Examples. The proportions of the components and evaluated results are given in Table 3.

### Comparative Example 10

A resin composition and specimens were prepared in the same manner as in Examples except that instead of the graft-modified ethylene-vinyl acetate, EV3 produced by Comparative Example 3 was used, and evaluation was made in the same manner as in Examples. The proportions of the components and evaluated results are given in Table 3. Comparative Example 11

A resin composition and specimens were prepared in the same manner as in Examples except that instead of the graft-modified ethylene-vinyl acetate copolymer, an ethylene-glycidyl methacrylate copolymer (BONDFAST E® produced Sumitomo Kagaku Kogyo K.K., abbreviated as BF in the table), and evaluation was made in the same manner as in Examples. The proportions of the components and evaluated results are given in Table 3.

**Table 3**

| | Proportions | | | | | Characteristics of resin compositions (molded articles) | | | | |
|---|---|---|---|---|---|---|---|---|---|---|
| | (A) | (B) | (C) | | | Melt viscosity poise | Retention stability under heating % | Melt tension g | Impact strength Kg.cm/cm | Tensile rupture elongation % |
| | PBT | MEV Lower: kind | CP | GF | TBPB | | | | | |
| Example 11 | 100 | 20 MEV1 | 2.0 | | - | 6540 | 99 | 23.6 | 49 | 195 |
| Example 12 | 100 | 10 MEV3 | 1.5 | - | 0.03 | 6950 | 105 | 24.1 | 13 | 183 |
| Example 13 | 100 | 10 MEV4 | 1.5 | - | 0.03 | 5910 | 95 | 12.5 | 12 | 110 |
| Example 14 | 100 | 10 MEV3 | 1.5 | 10 | 0.03 | 7570 | 101 | 22.6 | 13 | - |
| Comp. Ex. 8 | 100 | - | - | - | - | 3100 | 40 | 0.1 | 2 | 195 |
| Comp. Ex. 9 | 100 | - | 1.5 | - | 0.03 | 3200 | 45 | 3.6 | 3 | 52 |
| Comp. Ex. 10 | 100 | 10 EV3 | 1.5 | - | - | 2800 | 38 | 1.5 | 5 | 26 |
| Comp. Ex. 11 | 100 | 10 BF | 1.5 | 10 | 0.03 | 12900 | 49 | 21.0 | 8 | 125 |

### INDUSTRIAL APPLICABILITY

As stated above, the graft-modified ethylene-vinyl acetate copolymer of the present invention is excellent in thermal decomposition resistance, adhesion characteristics to polar materials and compatibility with engineering plastics such as polyamide resins and polyester resins, and therefore, it is useful in the field of various adhesives, modification of various resins and compatibility improvers for polymer blends.

Further, the resin composition comprising (A) a polyamide resin and/or a polyester resin and (B) a graft-modified ethylene-vinyl acetate copolymer is excellent in mechanical properties such as impact strength, rigidity and strength, and has well balanced physical properties such as heat resistance and moldability, and thus, it provides high quality molded articles as various parts in the field of automobile, machinery, electric and electronic appliance and the like.

Furthermore, the resin composition comprising (A) a polyester resin, (B) a graft-modified ethylene-vinyl acetate copolymer and (C) a glycidyl group-containing vinyl copolymer is excellent in melt characteristics such as melt tension, melt viscosity and retention stability under heating and has well balanced physical properties such as impact strength and moldability, and thus it provides excellent molded articles as various parts in the field of automobile, machinery, electric and electronic appliance and the like.

## Claims

1. A graft-modified ethylene-vinyl acetate copolymer obtained by an impregnation polymerizaton method comprising the steps of:
preparing an aqueous suspension containing
(a) 100 parts by weight of an ethylene-vinyl acetate copolymer,
(b) 0.1 to 50 parts by weight of a compound (b1) having a glycidyl group as represented by a general formula (I): 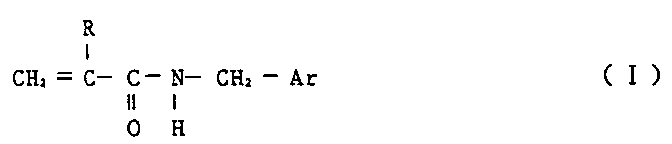 wherein Ar is an aromatic hydrocarbon group of C₆-C₂₃ having at least one glycidyloxy group, and R is a hydrogen atom or a methyl group,
or said compound (b1) and a compound (b2) having a glycidyl group comprising an unsaturated glycidyl ester,
(c) 1 to 500 parts by weight of a vinyl monomer, and
(d) 0.001 to 10 parts by weight of a radical initiator to 100 parts by weight in total of the components (b) and (c),
impregnating the component (a) with the components (b) and (c) in the aqueous suspension, and
polymerizing the components (b) and (c) onto the component (a).

2. The graft-modified ethylene-vinyl acetate copolymer of Claim 1, wherein the ethylene-vinyl acetate copolymer (a) comprises 50 - 99 % by weight of ethylene and 50 - 1 % by weight of vinyl acetate and has a melt flow rate of 0.1 - 500 g/10min., according to JIS K 6730.

3. The graft-modified ethylene-vinyl acetate copolymer of Claim 1 or 2, wherein the compound (b1) having a glycidyl group as the component (b) is represented by a structural formula (II):

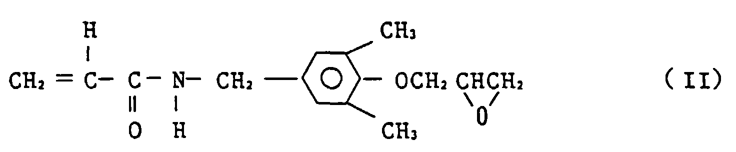

4. The graft-modified ethylene-vinyl acetate copolymer of any one of Claims 1 - 3, wherein the compound (b2) having a glycidyl group comprising an unsaturated glycidyl ester as the component (b) is glycidyl methacrylate.

5. The graft-modified ethylene-vinyl acetate copolymer of Claim 1 or 2, wherein the component (b) comprises a mixture of 1 - 99 % by weight of the glycidyl methacrylate and 1 - 99 % by weight of a compound represented by the structural formula (II):

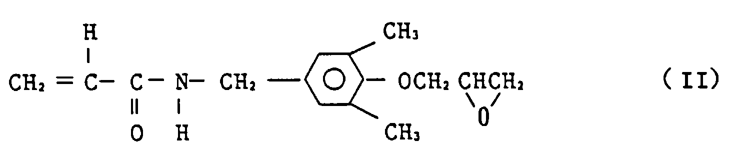

6. The graft-modified ethylene-vinyl acetate copolymer of any one of claim of Claims 1 - 5, wherein the vinyl monomer as the component (c) is at least one compound selected from the group consisting of aromatic vinyl compounds, acrylic acid alkyl esters containing an alkyl group having 1 to 22 carbon atoms, methacrylic acid alkyl esters containing an alkyl group having 1 to 22 carbon atoms, vinyl alkyl ethers containing group having 1 to 22 carbon atoms, vinyl alcohols, unsaturated nitrile compounds, unsaturated amino compounds, maleic acid dialkyl esters containing an alkyl group having 1 to 9 carbons atoms, allyl alkyl ethers containing an alkyl group having 1 to 8 carbon atoms, allyl acrylic acid ester, diene compounds, maleic acid anhydride, maleic acid, acrylic acid, methacrylic acid and vinyl acetate.

7. A resin composition comprising a component (A) and a component (B):
(A) 100 parts by weight of a polyamide resin and/or a polyester resin,
(B) 1 - 100 parts by weight of a graft-modified ethylene-vinyl acetate copolymer obtained by an impregnation polymerizaton method comprising the steps of:
preparing an aqueous suspension containing
(a) 100 parts by weight of an ethylene-vinyl acetate copolymer,
(b) 0.1 to 50 parts by weight of a compound (b1) having a glycidyl group as represented by a general formula (I): 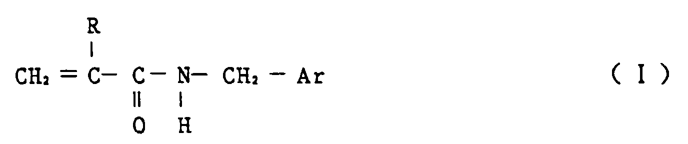 wherein Ar is an aromatic hydrocarbon group of C₆-C₂₃ having at least one glycidyloxy group, and R is a hydrogen atom or a methyl group,
or said compound (b1) and a compound (b2) having a glycidyl group comprising an unsaturated glycidyl ester,
(c) 1 to 500 parts by weight of a vinyl monomer, and
(d) 0.001 to 10 parts by weight of a radical initiator to 100 parts by weight in total of the components (b) and (c),
impregnating the component (a) with the components (b) and (c) in the aqueous suspension, and
polymerizing the components (b) and (c) onto the component (a).

8. A resin composition comprising a component (A), a component (B) and a component (C):
(A) 100 parts by weight of a polyester resin,
(B) 1 - 100 parts by weight of a graft-modified ethylene-vinyl acetate copolymer obtained by an impregnation polymerizaton method comprising the steps of:
preparing an aqueous suspension containing
(a) 100 parts by weight of an ethylene-vinyl acetate copolymer,
(b) 0.1 to 50 parts by weight of a compound (b1) having a glycidyl group as represented by a general formula (I): 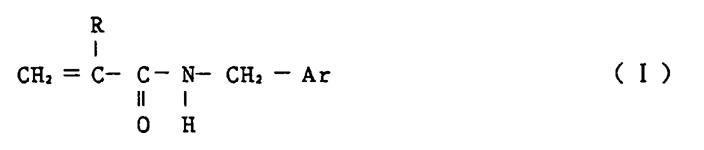 wherein Ar is an aromatic hydrocarbon group of C₆-C₂₃ having at least one glycidyloxy group, and R is a hydrogen atom or a methyl group,
or said compound (b1) and a compound (b2) having a glycidyl group comprising an unsaturated glycidyl ester,
(c) 1 to 500 parts by weight of a vinyl monomer, and
(d) 0.001 to 10 parts by weight of a radical initiator to 100 parts by weight in total of the components (b) and (c),
impregnating the component (a) with the components (b) and (c) in the aqueous suspension, and
polymerizing the components (b) and (c) onto the component (a),
(C) 0.1 - 20 parts by weight of a glycidyl group-containing vinyl copolymer comprising 99 - 50 % by weight of at least one vinyl monomer selected from the group consisting of styrene, α-methylstyrene, acrylonitrile, methyl methacrylate, butyl methacrylate, brominated styrenes and phenyl maleimides and 1 - 50 % by weight of glycidyl methacrylate.

9. The resin composition of Claim 7, wherein the polyamide resin is polycaproamide (nylon 6), polyhexamethylene adipamide (nylon 66), polydodecanamide (nylon 12), polytetramethylene adipamide (nylon 46) or a mixture of two or more of those polyamides.

10. The resin composition of Claim 7 or 8, wherein the polyester resin is polyethylene terephthalate, polybutylene terephthalate or a mixture thereof.

11. A resin composition comprising 1 to 100 parts by weight of at least one filler selected from the group consisting of silica, talc, mica, glass fiber, glass beads, hollow glass beads, neutral clay, carbon fiber, aromatic polyamide fiber, aromatic polyester fiber, vinylon fiber, carbonized fiber, silicon carbide fiber, alumina fiber, potassium titanate fiber and metallic fiber to 100 parts by weight of the resin composition of any one of Claims 7 - 10.

12. A resin composition comprising 1 to 50 parts by weight of at least one flame retardant to 100 parts by weight of the resin component in the resin compositions of any one of Claims 7 to 11, said flame retardant being selected from the group consisting of halogenated flame retardants composed of tetrabromobisphenol A, 2,2-bis (4-hydroxy-3,5-dibromophenyl) propane, hexabromobenzene, tris (2,3-dibromopropyl) isocyanurate, 2,2-bis (4-hydroxyethoxy-3, 5-dibromophenyl) propane, decabromodiphenyloxide, brominated polyphosphate, chlorinated polyphosphate and chlorinated paraffin, phosphorus flame retardants composed of ammonium phosphate, tricresyl phosphate, triethyl phosphate, tris-chloroethyl phosphate, tris-(β-chloroethyl) phosphate, tris-dichloropropyl phosphate, cresyl phenyl phosphate, xylenyl diphenyl phosphate, acidic phosphoric acid ester and nitrogen-containing phosphorus compounds, inorganic flame retardants composed of red phosphorus, tin oxides, antimony trioxide, zirconium hydroxide, barium metaborate, aluminium hydroxide and magnesium hydroxide, and high molecular flame retardants composed of brominated polystyrenes, brominated poly α-methylstyrenes, brominated polycarbonates, brominated polyepoxy resins, chlorinated polyethylenes, chlorinated polyα-methylstyrenes, chlorinated polycarbonates and chlorinated polyepoxy resins.
